# FASCICULE DE BREVET EUROPEEN

(11) **EP 3 464 056 B1**
(45) Date de publication et mention de la délivrance du brevet: **13.05.2020**
(21) Numéro de dépôt: 17745778.5
(22) Date de dépôt: 26.05.2017
(51) Int. Cl.: B63H 16/04

(54) **ENSEMBLE PAGAIE COMPRENANT UNE PAGAIE ET UNE PALE AMOVIBLE**
PADDELANORDNUNG MIT EINEM PADDEL UND EINEM AUSWECHSELBAREN BLATT
PADDLE ASSEMBLY COMPRISING A PADDLE AND A REMOVABLE BLADE

(30) Priorité: 27.05.2016 FR 1654826
(43) Date de publication de la demande: 10.04.2019
(73) Titulaire: Roger, Donatien, 76130 Mont-Saint-Aignan (FR)
(72) Inventeur: Roger, Donatien, 76130 Mont-Saint-Aignan (FR)
(74) Mandataire: Cabinet Chaillot
(86) Numéro de dépôt international: PCT/FR2017/051318
(87) Numéro de publication internationale: WO 2017/203189

(56) Documents cités:
- WO-A1-2013/121120
- WO-A1-2015/077450
- US-B1- 8 100 733
- US-B1- 8 926 384

## Description

La présente invention concerne le domaine des pagaies, et porte en particulier sur un ensemble pagaie comprenant une pagaie et une pale amovible, notamment pour le stand up paddle

La présente invention concerne en particulier un ensemble pagaie selon le préambule de la revendication 1. Un tel ensemble est connu du document US 8, 926, 384 B1.

Le « stand up paddle », également nommé SUP ou planche à rame, est un sport de glisse nautique dans lequel le pratiquant est debout sur une planche plus longue qu'une planche de surf classique, se propulsant à l'aide d'une pagaie (« paddle » en anglais).

Lorsqu'un débutant apprend à pagayer avec un stand up paddle, il découvre que la planche tend à tourner du côté opposé où il pagaye. Ce phénomène, appelé « effet de rame (« row effect » en anglais), est plus ou moins prononcé. Il est d'autant plus prononcé que la planche est courte. Ceci oblige à changer de côté pour pagayer de l'autre côté, afin de contrer l'effet de rame. Un débutant pourrait éventuellement se décourager si l'effet de rame est trop prononcé.

De plus, comme son nom l'indique, le stand up paddle se pratique en position debout. Il peut être reposant et relaxant de pagayer en position assise, comme pour un kayak. Dans ce cas, il est indispensable de disposer d'une pagaie double, sinon la pagaie simple de stand up paddle est fatigante et encombrante, parce que trop longue si l'on est assis sur la planche.

Enfin, lorsqu'on pratique le stand up paddle dans les vagues, si les déferlantes sont puissantes et/ou si le vent est fort, il peut devenir très difficile de « passer la barre », autrement dit d'aller au large, après le point de déferlement des vagues. Il existe différents types de spots de vagues. Les spots de type récif (« reef » en anglais) ou ligne de démarcation (le terme anglais correspondant « point break » étant plus connu), tels qu'on peut les trouver dans les îles, permettent souvent à un surfer ou SUPer (c'est-à-dire, un pratiquant de SUP) de contourner les vagues par le côté. Par contre, les vagues qui sont générées par le vent, alors que le vent souffle au moins à force 4 vers la plage (conditions vent de mer (en anglais « onshore ») très fréquentes en Manche ou en Atlantique) sont généralement des déferlantes très difficiles à passer, surtout pour un SUPer. Les surfeurs aguerris utilisent la technique dite du « canard » pour plonger sous la vague avant qu'elle n'arrive sur eux, mais cette technique est impossible pour un SUP et un pratiquant debout. Il en résulte que la plupart des pratiquants de stand up paddle qui veulent pratiquer dans les vagues ne peuvent pas pratiquer leur sport si les déferlantes et le vent sont trop forts, ce qui constitue pourtant des conditions très fréquentes. Il convient de noter que si le vent est « offshore », autrement dit s'il souffle de terre, le passage de la barre sera plus facile avec la pagaie simple, puisque le vent poussera le SUPer vers le large et aidera implicitement le SUPer à passer les barres. Dans toutes les autres orientations de vent, le passage de la barre sera d'autant plus compliqué que le vent sera fort.

Il est à noter que les kayakistes, en particulier ceux qui pratiquent le wave-ski (kayak de surf pour les vagues), sont capables d'affronter de très grosses vagues (parfois jusqu'à 3 mètres), puisqu'ils peuvent pagayer plus fort qu'un SUPer, grâce à une pagaie double. La grande majorité des SUPers, même aguerris, sont incapables de passer une déferlante de plus d'1,50m. Or, plus les vagues sont hautes, et plus les conditions sont intéressantes à surfer en SUP. Pour les pratiquants qui ne maîtrisent pas parfaitement la technique du surf en pagaie simple avec un SUP, il peut être intéressant d'utiliser la planche comme un kayak sur laquelle on s'assoit pour pagayer avec une pagaie double. Ils n'auront pas de problème d'équilibre et pourront apprendre à prendre des vagues assis.

Il existe des pagaies doubles très grandes pour le SUP, afin de pouvoir pagayer debout. Cependant, ces pagaies doubles existantes ne sont pas transformables en pagaies simples une fois le passage de la barre effectué.

En outre, il existe également des pagaies doubles démontables en 2, voire 3 parties, pour la pratique du kayak. Ces pagaies doubles sont démontables afin de faciliter le rangement. Cependant, il n'est pas prévu de les utiliser une fois qu'une des parties est démontée, parce qu'il manquerait l'élément formant poignée à l'extrémité opposée à la pale, qui permet d'orienter convenablement la pagaie.

Il existe également une pagaie double démontable, munie d'un élément formant poignée au niveau de l'une des pales, l'élément formant poignée étant fixé dans le prolongement du manche de la pagaie, à l'intérieur de l'une des pales. Cependant, l'inconvénient de cette pagaie est qu'elle doit obligatoirement être utilisée avec les deux pales, même si on l'utilise en pagaie simple en tenant l'élément formant poignée. L'élément formant poignée de cette pagaie étant placé dans l'une des pales, la préhension de l'élément formant poignée est sous le niveau de l'extrémité de la pale dans la direction verticale d'utilisation en pagaie simple, et le risque de se blesser avec l'extrémité de la pale portant la poignée au niveau du visage est très élevé. Il est donc nécessaire de pouvoir démonter la pale pour éviter de se blesser, notamment au niveau du haut du corps dans les vagues en cas de chute.

Enfin, il existe une pagaie double, dont l'une des pales est creusée pour former une poignée. Cependant, l'inconvénient de cette pagaie double, encore une fois, est l'encombrement et le risque de se blesser avec la tranche de la pale lorsqu'on pagaie debout en configuration pagaie simple. De plus, il n'est pas possible avec cette pagaie de retirer l'une des pales. En outre, la pale avec la poignée creusée est trop petite, et sa longueur totale est trop faible pour véritablement apporter un plus pour passer les déferlantes.

La présente invention vise à résoudre les inconvénients de l'état antérieur de la technique, en proposant un ensemble pagaie comprenant une pagaie simple et une pale amovible, la pale amovible étant configurée pour être fixée sur l'extrémité formant poignée de la pagaie simple, généralement utilisée pour le stand up paddle, afin de transformer la pagaie simple en pagaie double, par exemple de type pagaie de kayak, ce qui permet de générer davantage de puissance à la rame pour pouvoir passer les barres. La pale amovible est également configurée pour être fixée contre la pale de la pagaie simple afin d'utiliser l'ensemble pagaie en configuration pagaie simple, ce qui permet de ranger la pale amovible lorsque l'ensemble pagaie n'est pas utilisé en configuration pagaie double et ainsi d'éviter des risques de blessure avec la tranche de la pale amovible ou de perte de la pale amovible.

La présente invention a donc pour objet un ensemble pagaie selon la revendication 1. Cet ensemble comprend une pagaie, ladite pagaie comprenant un manche à une extrémité duquel est fixée une pale fixe et à l'extrémité opposée duquel est fixé un élément formant poignée. L'ensemble pagaie comprend en outre une pale amovible et des moyens de fixation configurés pour fixer de manière amovible la pale amovible sur la pagaie sur l'une de l'extrémité du manche côté élément formant poignée et de l'extrémité du manche côté pale fixe, de telle sorte que l'ensemble pagaie est apte à adopter une première configuration pagaie double lorsque la pale amovible est fixée sur l'extrémité du manche côté élément formant poignée ou une seconde configuration pagaie simple lorsque la pale amovible est fixée sur l'extrémité du manche côté pale fixe contre la pale fixe.

Ainsi, dans la configuration pagaie double, la pale amovible s'étend au-delà de l'élément formant poignée, la pale amovible étant fixée de manière amovible sur le manche de la pagaie et/ou directement sur l'élément formant poignée de la pagaie, ce qui permet au pratiquant de stand up paddle d'utiliser l'ensemble pagaie en configuration pagaie double, assis ou à genoux sur la planche, afin de pouvoir passer plus facilement la barre, la cadence de rame étant plus élevée avec une pagaie double qu'avec une pagaie simple.

Il est à noter que, dans la configuration pagaie double, la pale fixe et la pale amovible sont de préférence dans le même plan, mais pourraient également former un angle entre elles autour du manche, afin d'améliorer la pénétration dans l'air de la pale qui est en l'air.

Une fois que le pratiquant de stand up paddle a passé la barre, il peut retirer la pale amovible de l'extrémité côté élément formant poignée de la pagaie et ensuite fixer la pale amovible sur l'extrémité côté pale fixe de la pagaie afin d'utiliser l'ensemble pagaie dans la configuration pagaie simple, la pale amovible étant disposée contre la pale fixe et fixée de manière amovible au manche de la pagaie et/ou directement sur la pale fixe de la pagaie, ce qui permet de ranger la pale amovible lorsque l'ensemble pagaie n'est pas utilisé en configuration pagaie double et ainsi d'une part d'éviter des risques de blessure avec la tranche de la pale amovible et d'entrave à l'utilisation de la pagaie simple, et d'autre part de perte de la pale amovible.

Les moyens de fixation sont disposés sur la pagaie, à savoir au moins l'un parmi le manche, l'élément formant poignée et la pale fixe, et/ou sur la pale amovible, lesdits moyens de fixation permettant de fixer rapidement et de manière amovible la pale amovible sur l'une ou l'autre des extrémités du manche de la pagaie selon la configuration utilisée.

Il est indispensable que la pale amovible puisse être fixée ou détachée très rapidement. En effet, un pratiquant de stand up paddle peut être amené à attacher et détacher la pale amovible un certain nombre de fois par session, une session étant le terme consacré pour désigner une sortie en mer pendant laquelle un sport de glisse est pratiqué. En particulier, si les déferlantes sont trop difficiles à passer avec l'ensemble pagaie en configuration pagaie simple, le pratiquant devra installer la pale amovible sur l'extrémité côté élément formant poignée de la pagaie pour passer les déferlantes, afin de pagayer avec les deux pales. Par contre, une fois la barre passée, il sera intéressant de détacher la pale amovible de l'extrémité côté élément formant poignée de la pagaie et d'utiliser l'ensemble pagaie en configuration pagaie simple pour profiter des avantages de la pagaie simple pour surfer.

Le manche de la pagaie a, de préférence, une section transversale de forme circulaire. Cependant, la ou les parties du manche de la pagaie qui sont configurées pour recevoir la pale amovible peuvent également être carrées ou avoir au moins une partie plane, pour éviter à la pale amovible de risquer de tourner autour de l'axe du manche de la pagaie lorsqu'elle y est fixée.

La pagaie et la pale amovible sont, de préférence en fibre de carbone de telle sorte que le poids total de l'ensemble pagaie reste raisonnable, mais pourraient également être en fibre de verre, en poly(p-phénylènetéréphtalamide) (PPD-T, commercialisé sous la marque déposée Kevlar®), en une combinaison de ceux-ci (par exemple, carbone et fibre de verre), en matière plastique telle que le polyamide, ou en bois, sans s'écarter du cadre de la présente invention.

Lorsque la pale amovible est superposée à la pale fixe, celle-ci ajoute par exemple environ 200 grammes au bout du manche de la pagaie simple. Ce petit surpoids n'est pas gênant, et s'avère même avantageux. En effet, il ajoute de la stabilité, par effet de balancier (comme une perche de funambule), lorsque le pratiquant attend debout une vague, notamment lorsque le plan d'eau est difficile et clapoteux, ce qui se produit lorsque le plan d'eau est venté et la mer agitée.

Il est à noter que, lorsque l'ensemble pagaie n'est pas utilisé dans la configuration pagaie double, la pale amovible pourrait également être fixée sur l'avant de la planche de stand up paddle à l'aide d'une attache rapide, la pale amovible pourrait également être logée dans une poche, un filet, une trappe ou un système d'emboîtement disposé(e) sur la planche de stand up paddle, ou la pale amovible pourrait également être logée dans un sac à dos porté par le pratiquant tel qu'un sac à dos constitué d'un filet pour évacuer l'eau rapidement, sans s'écarter du cadre de la présente invention.

Selon l'invention, dans la seconde configuration, l'intrados de la pale amovible est disposé contre l'extrados de la pale fixe dont il épouse la forme, ou l'extrados de la pale amovible est disposé contre l'intrados de la pale fixe dont il épouse la forme.

Ainsi, la pale fixe et la pale amovible disposées l'une sur l'autre forment l'unique pale de l'ensemble pagaie en configuration pagaie simple, la pale amovible étant la contre-forme de la pale fixe.

Il est à noter que, dans un mode de réalisation préféré de l'invention, l'intrados de la pale amovible sera disposé contre l'extrados de la pale fixe.

Les épaisseurs des pales fixe et amovible sont de préférence réduites par rapport à des pales conventionnelles, de telle sorte que l'unique pale de l'ensemble pagaie en configuration pagaie simple, constituée des pales fixe et amovible disposées l'une sur l'autre, possède une épaisseur de pale conventionnelle.

L'extrémité de la pale amovible opposée à l'extrémité fixée sur la pagaie est, de préférence, légèrement courbée vers la pale fixe dans la configuration pagaie double, de telle sorte que, lorsque la pale amovible est en position sur la pale fixe, l'élasticité de la fibre de carbone plaque parfaitement ladite extrémité de la pale amovible sur la pale fixe.

Selon une caractéristique particulière de l'invention, les moyens de fixation comprennent au moins une attache comprenant un élément d'accouplement avec au moins une encoche, un levier de serrage comprenant un crochet, et un câble de serrage reliant l'élément d'accouplement et le levier de serrage, l'élément d'accouplement étant fixé sur l'un de la pale amovible et du manche de la pagaie, le levier de serrage étant configuré pour être rabattu en force contre le manche de la pagaie une fois que le câble de serrage entoure l'autre de la pale amovible et du manche de la pagaie et que le crochet du levier de serrage est inséré dans l'une de l'au moins une encoche de l'élément d'accouplement.

Ainsi, cette attache de type fixation de chaussure de ski ou sauterelle à loquet permet de fixer rapidement et de manière amovible la pale amovible sur l'une ou l'autre des extrémités du manche de la pagaie selon la configuration utilisée.

Il est à noter que, lorsque les attaches sont fixées sur le manche de la pagaie, au moins une attache est fixée au niveau de chaque extrémité du manche de la pagaie.

Selon une caractéristique particulière de l'invention, les moyens de fixation comprennent au moins une bande de fixation de type à boucles et crochets disposée sur l'un de la pale amovible et du manche de la pagaie.

Ainsi, cette bande de fixation de type à boucles et crochets, telle qu'une bande Velcro®, permet de fixer rapidement et de manière amovible la pale amovible sur l'une ou l'autre des extrémités du manche de la pagaie selon la configuration utilisée, les boucles et les crochets de ladite bande de fixation s'agrippant les uns avec les autres une fois que la bande de fixation entoure le manche de la pagaie et la pale amovible.

Il est à noter que, lorsque les bandes de fixation sont fixées sur le manche de la pagaie, au moins une bande de fixation est fixée au niveau de chaque extrémité du manche de la pagaie.

Selon une caractéristique particulière de l'invention, le manche de la pagaie est creux et les moyens de fixation comprennent au moins une lame ressort disposée dans le manche de la pagaie et dont les deux extrémités portent respectivement deux plots agencés pour faire saillie de deux trous formés dans le manche de la pagaie et diamétralement opposés, les deux plots formant ainsi deux boutons poussoirs, la pale amovible comprenant deux trous traversants configurés pour recevoir les deux boutons poussoirs afin de fixer la pale amovible sur le manche de la pagaie.

Ainsi, le pratiquant de stand up paddle peut fixer la pale amovible sur le manche de la pagaie en pressant les deux boutons poussoirs tout en disposant les deux trous de la pale amovible en regard des deux trous du manche de la pagaie, puis en relâchant les deux boutons poussoirs de telle sorte que les deux boutons poussoirs font saillie des deux trous de la pale amovible.

De même, le pratiquant peut détacher la pale amovible en pressant les deux boutons poussoirs puis en retirant la pale amovible.

Selon une caractéristique particulière de l'invention, les moyens de fixation comprennent au moins un élément d'accouplement disposé à travers l'épaisseur de la pale amovible ou rapporté sur celle-ci et configuré pour s'accoupler avec un élément complémentaire disposé sur la pagaie.

Ainsi, l'accouplement de l'élément d'accouplement avec l'élément complémentaire, par exemple par emboîtement, vissage et/ou blocage, permet de fixer la pale amovible sur la pagaie.

L'élément complémentaire peut, par exemple, être une plaque fixée sur la pale fixe et sur laquelle vient s'emboîter un disque disposé dans l'épaisseur de la pale amovible en tant qu'élément d'accouplement, ledit disque étant fixé sur ladite plaque par rotation du disque d'un demi-tour, ce type de fixation étant similaire à une fixation à plaques de snowboard.

L'élément complémentaire peut être disposé sur la pale fixe, le manche et/ou l'élément formant poignée de la pagaie.

Selon une caractéristique particulière de l'invention, l'au moins un élément d'accouplement est une vis ou un bouton à tige filetée et l'élément complémentaire est un trou taraudé.

Ainsi, le vissage de la vis ou de la tige filetée du bouton à tige filetée à travers l'épaisseur de la pale amovible puis dans le trou taraudé de la pagaie permet de fixer la pale amovible sur la pagaie.

Selon une caractéristique particulière de l'invention, les moyens de fixation comprennent au moins un levier à serrage rapide disposé sur le manche de la pagaie et configuré pour être inséré dans une encoche formée dans la pale amovible puis pour être serré afin de fixer la pale amovible sur le manche de la pagaie.

Ainsi, une fois que le levier à serrage rapide a été inséré dans l'encoche de la pale amovible puis a été serré, le levier à serrage rapide permet de fixer la pale amovible sur le manche de la pagaie.

Le levier à serrage rapide pourrait également, sans s'écarter du cadre de la présente invention, être solidaire de la pale amovible, en vue d'une fixation sur le manche de la pagaie et/ou dans la partie haute (base en contact avec le manche) de la pale fixe.

Il est à noter que les moyens de fixation pourraient également être constitués par emboîtement dans le manche ou autour du manche, le maintien en place de la pale amovible étant assuré par l'un parmi un manchon coulissant, un manchon rotatif, une bague, un poussoir et un système élastique, sans s'écarter du cadre de la présente invention.

Les moyens de fixation pourraient également être constitués par emboîtement de type baïonnette dans le manche, tels que par emboîtement selon un système équivalent aux ampoules à baïonnettes, par rotation, sans s'écarter du cadre de la présente invention.

Les moyens de fixation peuvent avantageusement être recouverts en tout ou partie de mousse afin d'éviter d'endommager la planche de SUP lorsque la pagaie est utilisée, les moyens de fixation pouvant en effet endommager la planche lorsque la pagaie est plongée dans l'eau puis retirée de l'eau pour propulser la planche de SUP.

Selon une caractéristique particulière de l'invention, les moyens de fixation comprennent au moins une attache rapide solidaire d'une tige dont l'extrémité porte un moyen d'accrochage, un trou étant formé dans la pale amovible, et un trou étant formé sous la poignée et dans la pale fixe afin de fixer la pale amovible à l'une de la poignée ou de la pale fixe par passage de la tige dans les trous, et serrage de l'attache rapide avec les moyens d'accrochage qui coopèrent avec l'une de la poignée ou de la pale fixe.

Les moyens d'accrochage peuvent être un écrou coopérant avec une extrémité filetée de la tige, auquel cas les trous formés dans la poignée et la pale fixe sont de même section que la tige, ou peuvent être une barrette, formant avec la tige un T, les trous formés dans la poignée et la pale fixe étant alors longitudinaux pour permettre le passage de la barrette, qui est ensuite tournée de 90° pour solidariser la pale amovible avec l'une de la poignée et de la pale fixe, après serrage de l'attache rapide. Les moyens d'accrochage pourraient aussi être une baïonnette.

Les moyens de fixation pourraient également être constitués par emboîtement de type baïonnette dans le manche, tels que par emboîtement selon un système équivalent aux ampoules à baïonnettes, par rotation, sans s'écarter du cadre de la présente invention.

Selon une caractéristique particulière de l'invention, les moyens de fixation comprennent au moins une saillie disposée sur l'une de la pale amovible et de la pagaie et configurée pour s'emboîter dans au moins un renfoncement complémentaire disposé sur l'autre de la pale amovible et de la pagaie.

Ainsi, l'emboîtement de la saillie et du renfoncement complémentaire permet de maintenir en position la pale amovible avant fixation de celle-ci sur la pagaie, ce qui diminue le jeu de mouvement de la pale amovible une fois fixée.

Selon une caractéristique particulière de l'invention, l'au moins une saillie est au moins un pointeau configuré pour s'emboîter dans l'au moins un renfoncement complémentaire.

Ainsi, deux pointeaux peuvent, par exemple, être disposés sur la pale amovible et configurés pour s'emboîter dans deux renfoncements complémentaires disposés sur le manche de la pagaie.

Selon une caractéristique particulière de l'invention, l'au moins une saillie est au moins une rainure et l'au moins un renfoncement complémentaire est au moins une fente de forme complémentaire de l'au moins une rainure.

Ainsi, au moins une rainure peut, par exemple, être disposée sur la pale amovible et configurée pour s'emboîter dans au moins une fente complémentaire disposée sur la pale fixe de la pagaie dans la configuration pagaie double, ce qui permet de caler et de maintenir en position la pale amovible contre la pale fixe de la pagaie.

De plus, l'au moins une rainure permet de rigidifier la pale amovible afin d'éviter qu'elle ne se déforme lorsque le pratiquant pagaye.

L'au moins une rainure et l'au moins une fente complémentaire sont facultatives mais sont utiles pour bien caler la pale amovible sur la pale fixe et pour donner de la rigidité à la pale amovible qui pourra donc être plus mince que si elle n'avait pas de rainures ou nervures.

Il est à noter que les moyens de fixation comprennent de préférence plusieurs rainures et plusieurs fentes complémentaires afin de mieux caler la pale amovible sur la pale fixe.

Selon une caractéristique particulière de l'invention, l'extrémité de la pale amovible destinée à être fixée sur le manche de la pagaie est allongée et possède une forme complémentaire d'un renfoncement formé sur le manche de la pagaie, de telle sorte que, lorsque la pale amovible est fixée sur la pagaie, le manche possède une section sensiblement constante entre ses deux extrémités.

Ladite extrémité allongée de la pale amovible et la partie du manche sur laquelle est fixée celle-ci possèdent, de préférence, des formes de demi-cylindre, de telle sorte que, lorsque la pale amovible est fixée sur le manche de la pagaie, le manche de la pagaie possède une section sensiblement constante de forme circulaire entre ses deux extrémités.

Il est à noter que l'extrémité allongée de la pale amovible pourrait également avoir une forme de demi-cylindre creux configurée pour s'emboîter sur le manche de la pagaie, ladite extrémité allongée présentant un angle d'environ 10° par rapport à l'axe longitudinal de la pale amovible, de telle sorte que, dans la configuration double pagaie, le pratiquant peut passer sa main entre la pale amovible et l'élément formant poignée afin de pagayer en position debout en tenant l'élément formant poignée même si la pale amovible n'est pas démontée et fixée sur la pale fixe.

De plus, il est à noter que la pale amovible pourrait ne pas comprendre d'extrémité allongée et pourrait, dans la configuration double pagaie, être fixée directement sur l'élément formant poignée de la pagaie, la pale amovible étant ainsi plus courte.

Selon une caractéristique particulière de l'invention, le manche de la pagaie est réglable en hauteur.

Ainsi, le pratiquant de stand up paddle peut régler la pagaie à sa taille et à son style de pratique, par exemple course, surf ou promenade. Ce réglage en hauteur est facultatif mais appréciable.

Le manche de la pagaie comprend alors un premier tube creux fixé à la pale fixe et dans lequel peut coulisser de manière télescopique un second tube fixé à l'élément formant poignée, le second tube étant bloqué en position par un levier à serrage rapide disposé sur le premier tube au niveau de l'extrémité opposée à la pale fixe.

Dans ce cas, la pale amovible est fixée sur le premier tube et/ou la pale fixe dans la configuration pagaie simple, et est fixée sur le second tube et/ou l'élément formant poignée dans la configuration pagaie double.

Les diamètres des premier et second tubes étant différents afin de permettre au second tube de coulisser de manière télescopique dans le premier tube, la différence de diamètre est compensée soit par une cale rigide ou élastique disposée au niveau de l'extrémité côté élément formant poignée du second tube, soit par une pièce plastique de type manchon qui est commune à l'extrémité côté élément formant poignée du second tube et à l'embase de la pale fixe du premier tube et/ou présente le même diamètre.

Il est à noter que, dans le cas d'une attache de type fixation de chaussure de ski ou sauterelle à loquet, les différentes encoches de l'élément d'accouplement permettent de compenser la différence de diamètre sans avoir besoin de cale.

De plus, avec le manche de la pagaie réglable en hauteur, le pratiquant peut tourner légèrement le tube du manche comprenant l'élément formant poignée de manière à ce que les deux pales soient en position croisée, c'est-à-dire en position kayak, les deux pales formant un angle entre elles, permettant d'améliorer la pénétration dans l'air de la pale qui est en l'air.

Si le pratiquant veut générer un maximum de puissance en configuration pagaie double pour passer les vagues, il peut écarter les deux pales au maximum pour atteindre une longueur de pagaie de l'ordre de 2,40 à 2,50 m, voire davantage, afin d'avoir un effet de levier plus important.

Selon une caractéristique particulière de l'invention, l'ensemble pagaie comprend en outre un cordon de sécurité configuré pour relier la pale amovible au manche de la pagaie, ledit cordon de sécurité étant configuré pour coulisser le long du manche de la pagaie.

Ainsi, ce cordon de sécurité, ou « leash » en anglais, permet de toujours relier la pale amovible à la pagaie afin d'éviter de perdre la pale amovible lorsque celle-ci n'est pas fixée sur la pagaie par les moyens de fixation, par exemple lorsque le pratiquant lâche la pale amovible par inadvertance au milieu de l'eau ou lors d'une chute du pratiquant lorsque ce dernier est en train de fixer/détacher la pale amovible sur/de la pagaie.

Le cordon de sécurité est relié à la pale amovible par l'intermédiaire d'un trou dans la pale amovible dans lequel est inséré puis attaché le cordon de sécurité ou par l'intermédiaire d'une excroissance sur la pale amovible, ladite excroissance comprenant un orifice dans lequel est inséré puis attaché le cordon de sécurité.

Le cordon de sécurité est, de préférence, élastique afin d'apporter plus de confort au pratiquant lorsqu'il attache la pale amovible sur la pagaie.

Selon une caractéristique particulière de l'invention, la pale amovible et la pale fixe possèdent une ou plusieurs concavités dans une direction perpendiculaire à leur direction de longueur, permettant de rigidifier la pale, de diminuer son épaisseur tout en ayant un gain de puissance de propulsion.

Selon une caractéristique particulière de l'invention, la pale amovible et la pale fixe possèdent l'une d'une concavité dans une direction parallèle à leur direction de longueur ou d'une concavité dans une direction perpendiculaire à leur direction de longueur.

Ainsi, cette concavité permet au pratiquant d'avoir une meilleure propulsion de la planche lorsque celui-ci rame à l'aide de l'ensemble pagaie en configuration double pagaie.

Selon une caractéristique particulière de l'invention, la surface utile de la pale amovible est inférieure ou égale à la surface utile de la pale fixe.

La surface utile d'une pale est définie comme étant la surface destinée à entrer dans l'eau pour permettre la propulsion de la planche.

Selon une caractéristique particulière de l'invention, l'élément formant poignée est en forme de T dont le fût est solidaire du manche de la pagaie.

Ainsi, la forme en T de l'élément formant poignée permet une meilleure préhension de la poignée par le pratiquant de stand up paddle. L'élément formant poignée peut toutefois prendre d'autres formes, notamment par exemple une forme de boule, sans s'écarter du cadre de la présente invention.

Il est à noter que les moyens de fixation peuvent également être recouverts de mousse et/ou d'un manchon, de type néoprène, afin d'amortir le contact possible entre le flotteur de la planche et la pagaie. En cas de manchon, celui-ci doit pouvoir coulisser, de façon à pouvoir attacher ou détacher les moyens de fixation.

Pour mieux illustrer l'objet de la présente invention, on va en décrire ci-après, à titre illustratif et non limitatif, des modes de réalisation préférés, avec référence aux dessins annexés.

Sur ces dessins :
- la Figure 1 est une vue de face d'un ensemble pagaie selon un premier mode de réalisation de la présente invention lorsque la pale amovible de l'ensemble pagaie n'est pas fixée sur la pagaie de l'ensemble pagaie ;
- les Figures 2 et 2a sont une vue de face et une vue de côté de l'ensemble pagaie de la Figure 1 dans la première configuration double pagaie ;
- la Figure 3 est une vue de côté de l'ensemble pagaie de la Figure 1 dans la seconde configuration pagaie simple ;
- la Figure 4 est une vue en coupe longitudinale de la pale fixe et de la pale amovible de l'ensemble pagaie de la Figure 1 ;
- la Figure 5 est une vue en coupe transversale de la pale fixe et de la pale amovible de l'ensemble pagaie de la Figure 1 ;
- la Figure 6 est une vue en perspective de la pale fixe et de la pale amovible de l'ensemble pagaie selon un second mode de réalisation ;
- la Figure 7 est une vue en perspective de la pale amovible et du manche de la pagaie de l'ensemble pagaie selon un troisième mode de réalisation ;
- la Figure 8 est une vue de face de la pale amovible et du manche de la pagaie de l'ensemble pagaie selon un quatrième mode de réalisation ;
- la Figure 9 est une vue en perspective de la pale amovible et du manche de la pagaie de l'ensemble pagaie selon un cinquième mode de réalisation ;
- la Figure 10 est une vue de face de l'ensemble pagaie selon une variante de la présente invention ; et
- la Figure 11 est une vue en perspective de la pale amovible de l'ensemble pagaie selon une variante de la présente invention ;
- la Figure 12 est une vue en perspective de la pale amovible et du manche de la pagaie de l'ensemble pagaie selon un sixième mode de réalisation ;
- la Figure 13 est une vue en perspective éclatée de la pale amovible et de la pagaie selon le sixième mode de réalisation, sans l'attache ;
- la Figure 14 est une vue en perspective éclatée de la pale amovible et du manche de la pagaie de l'ensemble pagaie selon le sixième mode de réalisation, avec l'attache ; et
- la Figure 15 est une vue schématique d'une attache rapide selon un mode de réalisation de l'invention.

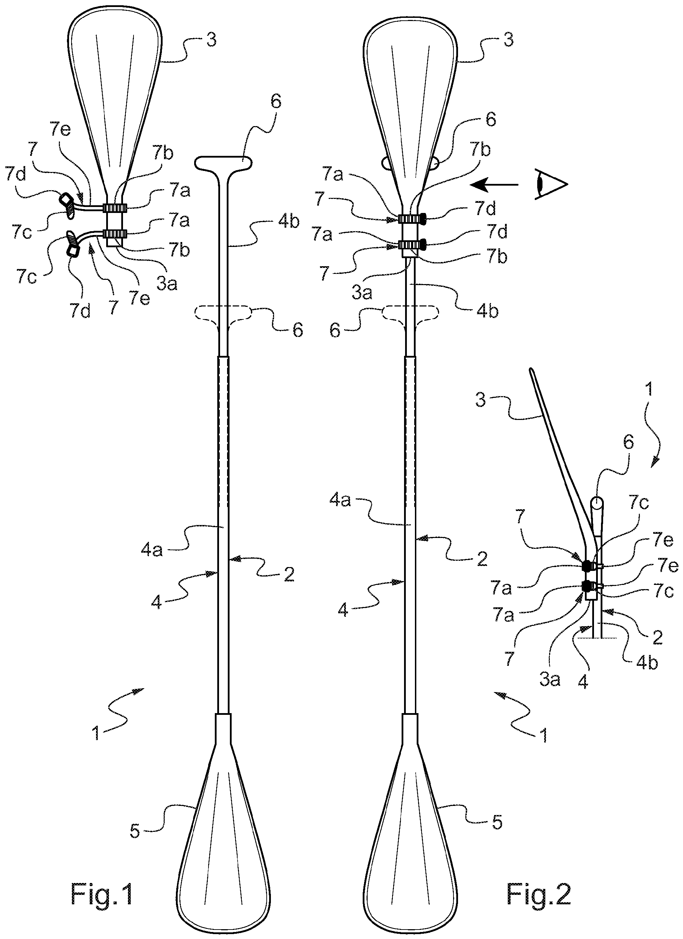

Si l'on se réfère aux Figures 1, 2 et 3, on peut voir qu'il y est représenté un ensemble pagaie 1 selon un premier mode de réalisation de la présente invention.

L'ensemble pagaie 1 comprend une pagaie 2 et une pale amovible 3.

La pagaie 2 comprend un manche 4 à une extrémité duquel est fixée une pale fixe 5 et à l'extrémité opposée duquel est fixé un élément formant poignée 6.

La pagaie 2 est une pagaie simple conventionnelle de stand up paddle.

L'élément formant poignée 6 est en forme de T dont le fût est solidaire du manche 4 de la pagaie 2, la forme en T de l'élément formant poignée 6 permettant une meilleure préhension de la poignée par le pratiquant de stand up paddle.

Le manche 4 de la pagaie 2 est réglable en hauteur, ce qui permet au pratiquant de stand up paddle de régler la pagaie 2 à sa taille et à son style de pratique.

Le manche 4 de la pagaie 2 comprend ainsi un premier tube creux 4a fixé à la pale fixe 5 et dans lequel peut coulisser un second tube 4b fixé à l'élément formant poignée 6, le second tube 4b étant bloqué en position par un levier à serrage rapide (non représenté sur les Figures) disposé sur le premier tube 4a au niveau de son extrémité opposée à la pale fixe 5.

Il est à noter que le manche 4 de la pagaie 2 pourrait également ne pas être réglable en hauteur et comporter un unique tube, sans s'écarter du cadre de la présente invention.

L'élément formant poignée 6 est représenté, aux Figures 1 et 2, en trait plein dans sa position déployée et en trait en pointillés dans sa position rétractée.

L'ensemble pagaie 1 comprend en outre des moyens de fixation configurés pour fixer de manière amovible la pale amovible 3 sur la pagaie 2 sur l'une de l'extrémité du manche 4 côté élément formant poignée 6 et de l'extrémité du manche 4 côté pale fixe 5, de telle sorte que l'ensemble pagaie 1 est apte à adopter une première configuration pagaie double lorsque la pale amovible 3 est fixée sur l'extrémité du manche 4 côté élément formant poignée 6 ou une seconde configuration pagaie simple lorsque la pale amovible 3 est fixée sur l'extrémité du manche 4 côté pale fixe 5 contre la pale fixe 5.

Les moyens de fixation comprennent une attache au minimum, l'attache rapide préférée étant de type fixation de wishbone de planche à voile qui fixe le wishbone au mât de la planche à voile.

Tel que représenté à la Figure 2, dans la configuration pagaie double, la pale amovible 3 s'étend au-delà de l'élément formant poignée 6, la pale amovible 3 étant fixée de manière amovible sur le second tube 4b du manche 4 de la pagaie 2, ce qui permet au pratiquant de stand up paddle d'utiliser l'ensemble pagaie 1 en configuration pagaie double, assis ou à genoux sur la planche de stand up paddle, afin de pouvoir passer plus facilement la barre dans l'eau.

Il est à noter que, dans la configuration pagaie double, la pale fixe 5 et la pale amovible 3 sont dans le même plan, en raison de la forme en T de l'élément formant poignée 6.

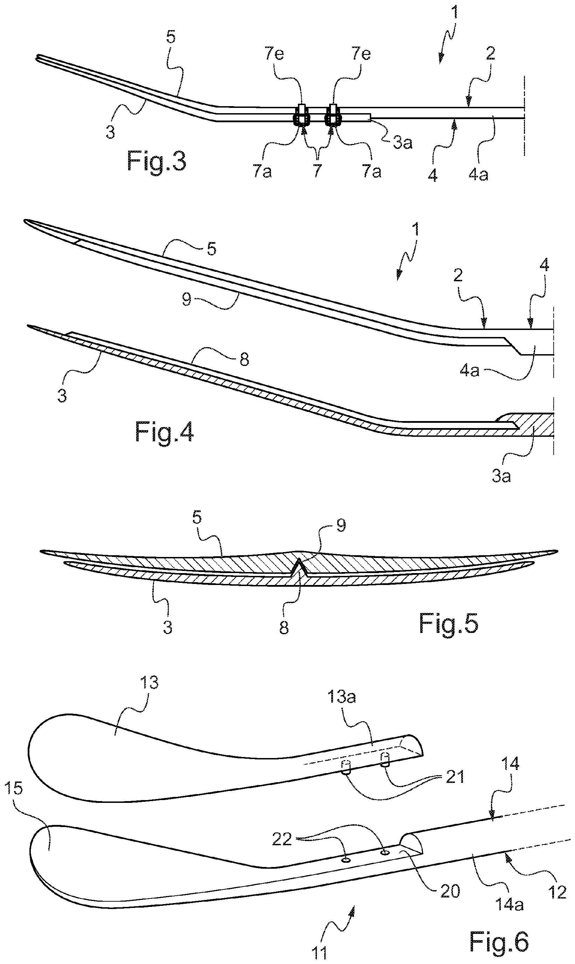

Une fois que le pratiquant de stand up paddle a passé la barre, il peut retirer la pale amovible 3 de l'extrémité côté élément formant poignée 6 de la pagaie 2 et ensuite fixer la pale amovible 3 sur l'extrémité côté pale fixe 5 de la pagaie 2 afin d'utiliser l'ensemble pagaie 1 dans la configuration pagaie simple, tel que représenté à la Figure 3.

Dans la configuration pagaie simple, la pale amovible 3 est disposée contre la pale fixe 5 et est fixée de manière amovible au premier tube 4a du manche 4 de la pagaie 2, ce qui permet de ranger la pale amovible 3 lorsque l'ensemble pagaie 1 n'est pas utilisé en configuration pagaie double et ainsi d'éviter des risques de blessure avec la tranche de la pale amovible 3 ou de la perte de la pale amovible 3.

La pagaie 2 et la pale amovible 3 sont, de préférence, en fibre de carbone de telle sorte que le poids total de l'ensemble pagaie 1 reste raisonnable, mais pourraient également être en fibre de verre, en poly(p-phénylènetéréphtalamide) (PPD-T, commercialisé sous la marque déposée Kevlar®), en une combinaison de ceux-ci (par exemple, carbone et fibre de verre), en matière plastique telle que le polyamide, ou en bois, sans s'écarter du cadre de la présente invention.

L'extrémité 3a de la pale amovible 3 destinée à être fixée sur le manche 4 de la pagaie 2 est allongée et possède une forme de demi-cylindre creux configurée pour s'emboîter sur le manche 4 de la pagaie 2.

Les moyens de fixation selon le premier mode de réalisation de l'invention comprennent deux attaches 7, chaque attache 7 comprenant un élément d'accouplement 7a avec des encoches 7b, un levier de serrage 7c comprenant un crochet 7d, et un câble de serrage 7e reliant l'élément d'accouplement 7a et le levier de serrage 7c, l'élément d'accouplement 7a étant fixé sur l'extrémité allongée 3a de la pale amovible 3, le levier de serrage 7c étant configuré pour être rabattu en force contre le manche 4 de la pagaie 2 une fois que le câble de serrage 7e entoure le manche 4 de la pagaie 2 et que le crochet 7d du levier de serrage 7c est inséré dans l'une des encoches 7b de l'élément d'accouplement 7a.

Il est à noter que les moyens de fixation pourraient également comprendre une unique attache ou au moins trois attaches, sans s'écarter du cadre de la présente invention.

De plus, l'élément d'accouplement 7a pourrait également être fixé sur le manche 4 de la pagaie 2, le levier de serrage 7c étant rabattu en force une fois que le câble de serrage 7e entoure l'extrémité allongée 3a de la pale amovible 3, sans s'écarter du cadre de la présente invention.

Il est à noter que les moyens de fixation pourraient également comprendre au moins une bande de fixation de type à boucles et crochets, de type Velcro®, disposée sur l'un de l'extrémité allongée 3a de la pale amovible 3 et du manche 4 de la pagaie 2, sans s'écarter du cadre de la présente invention.

Tel que représenté sur la vue de la Figure 2a, la pale amovible 3 présente un angle d'environ 10° par rapport à l'axe longitudinal de l'extrémité allongée 3a de la pale amovible 3, de telle sorte que, dans la configuration double pagaie, le pratiquant peut passer sa main entre la pale amovible 3 et l'élément formant poignée 6 afin de pagayer en position debout en tenant l'élément formant poignée 6 même si la pale amovible 3 n'est pas démontée et fixée contre la pale fixe 5.

Tel que représenté à la Figure 3, dans la seconde configuration pagaie simple, l'intrados de la pale amovible 3 est disposé contre l'extrados de la pale fixe 5 dont il épouse la forme. Ainsi, la pale fixe 5 et la pale amovible 3 disposées l'une sur l'autre forment l'unique pale de l'ensemble pagaie 1 en configuration pagaie simple, la pale amovible 3 étant la contre-forme de la pale fixe 5.

Il est à noter que, dans la seconde configuration, l'extrados de la pale amovible 3 pourrait également être disposé contre l'intrados de la pale fixe 5 dont il épouse la forme, sans s'écarter du cadre de la présente invention.

Les épaisseurs des pales fixe 5 et amovible 3 sont de préférence réduites par rapport à des pales conventionnelles, de telle sorte que l'unique pale de l'ensemble pagaie 1 en configuration pagaie simple, constituée des pales fixe 5 et amovible 3 disposées l'une sur l'autre, possède une épaisseur de pale conventionnelle.

La surface utile de la pale amovible 3 pourrait également être inférieure à la surface utile de la pale fixe 5, sans s'écarter du cadre de la présente invention.

Il est à noter que les attaches 7 pourraient également être recouvertes de mousse et/ou d'un manchon, de type néoprène, afin d'amortir le contact possible entre le flotteur de la planche de stand up paddle et la pagaie 2.

Si l'on se réfère aux Figures 4 et 5, on peut voir qu'il y est représenté les vues en coupe longitudinale et transversale des pales amovible 3 et fixe 5 de l'ensemble pagaie 1 selon le premier mode de réalisation de l'invention.

L'intrados de la pale amovible 3 comporte une rainure 8, et l'extrados de la pale fixe 5 comporte une fente complémentaire 9, la rainure 8 étant configurée pour s'emboîter dans la fente complémentaire 9 dans la configuration pagaie simple de l'ensemble pagaie 1, ce qui permet de caler et de maintenir en position la pale amovible 3 contre la pale fixe 5 de la pagaie 2.

De plus, la rainure 8 permet de rigidifier la pale amovible 3 afin d'éviter que celle-ci ne se déforme lorsque le pratiquant pagaye.

Il est à noter que l'extrados de la pale fixe 5 pourrait également comporter une rainure configurée pour s'emboîter dans une fente complémentaire dans l'intrados de la pale amovible 3, sans s'écarter du cadre de la présente invention.

La pale amovible 3 et la pale fixe 5 pourraient également respectivement comporter plusieurs rainures 8 et plusieurs fentes complémentaires 9, sans s'écarter du cadre de la présente invention.

La rainure 8 et la fente complémentaire 9 pourraient également se prolonger respectivement sur l'extrémité allongée 3a de la pale amovible 3 et le second tube 4a du manche 4 de la pagaie 2.

Si l'on se réfère à la Figure 6, on peut voir qu'il y est représenté un ensemble pagaie 11 selon un second mode de réalisation de l'invention.

Les éléments communs entre le premier mode de réalisation de l'invention sur les Figures 1 à 5 et ce second mode de réalisation de l'invention portent le même chiffre de référence auquel on a ajouté 10, et ne seront pas décrits plus en détail ici lorsqu'ils sont de structures identiques.

Il est à noter que les attaches, identiques aux attaches 7 du premier mode de réalisation, fixées sur l'extrémité allongée 13a de la pale amovible 13 n'ont pas été représentées à la Figure 6 pour de ne pas surcharger le dessin afin de faciliter la compréhension du lecteur.

Selon ce second mode de réalisation, l'extrémité allongée 13a de la pale amovible 13 possède une forme de demi-cylindre plein complémentaire d'un renfoncement 20 formé sur le manche 14 de la pagaie 12, de telle sorte que, lorsque la pale amovible 13 est fixée sur la pagaie 12, le manche 14 possède une section sensiblement constante entre ses deux extrémités.

Le manche 14 possède ainsi un renfoncement 20 sur le premier tube 14a du manche 14 au niveau de la pale fixe 15, ainsi qu'un autre renfoncement sur le second tube du manche 14 au niveau de l'élément formant poignée, chacun des premier 14a et second tubes du manche 14 ayant une forme de demi-cylindre plein complémentaire de l'extrémité allongée 13a de la pale amovible 13.

L'extrémité allongée 13a de la pale amovible 13 possède deux pointeaux 21 configurés pour s'emboîter dans deux trous complémentaires 22 formés sur le manche 14 de la pagaie 12 au niveau du renfoncement 20, ce qui permet de caler la position de la pale amovible 13 sur le manche 14.

Il est à noter que l'extrémité allongée 13a de la pale amovible 13 pourrait également comprendre un unique pointeau 21 ou au moins trois pointeaux 21, sans s'écarter du cadre de la présente invention.

Le manche 14 pourrait également comprendre au moins un pointeau et l'extrémité allongée 13a de la pale amovible 13 des trous complémentaires, sans s'écarter du cadre de la présente invention.

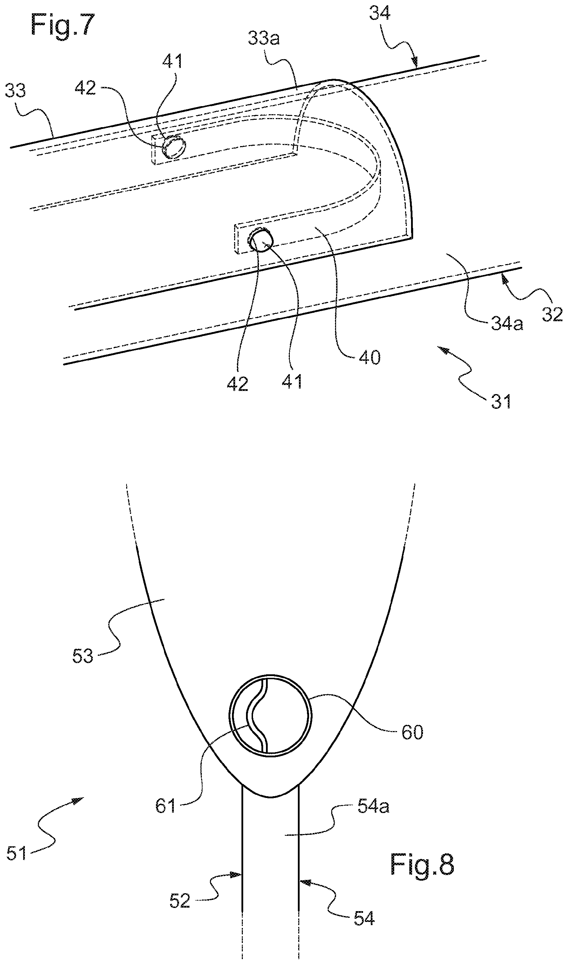

Si l'on se réfère à la Figure 7, on peut voir qu'il y est représenté un ensemble pagaie 31 selon un troisième mode de réalisation de l'invention.

Les éléments communs entre le premier mode de réalisation de l'invention sur les Figures 1 à 5 et ce troisième mode de réalisation de l'invention portent le même chiffre de référence auquel on a ajouté 30, et ne seront pas décrits plus en détail ici lorsqu'ils sont de structures identiques.

Selon ce troisième mode de réalisation, le manche 34 de la pagaie 32 est creux et les moyens de fixation de la pale amovible 33 sur la pagaie 32 sont constitués, dans chacun des premier 34a et second tubes du manche 34, d'une lame ressort 40 courbée en forme de U et disposée dans le manche 34 de la pagaie 32 et dont les deux extrémités portent respectivement deux plots 41 agencés pour faire saillie de deux trous traversants (non représentés à la Figure 7 afin de ne pas surcharger le dessin) formés dans le manche 34 de la pagaie 32 et diamétralement opposés, les deux plots 41 forment ainsi deux boutons poussoirs.

L'extrémité allongée 33a, en forme de demi-cylindre creux, de la pale amovible 33 comprend deux trous traversants 42 configurés pour recevoir les deux boutons poussoirs 41 afin de fixer la pale amovible 33 sur le manche 34 de la pagaie 32, et de pouvoir la libérer par appui simultané sur les boutons poussoirs.

Ainsi, le pratiquant de stand up paddle peut fixer la pale amovible 33 sur le manche 34 de la pagaie 32 en pressant les deux boutons poussoirs 41 tout en disposant les deux trous 42 de l'extrémité allongée 33a de la pale amovible 33 en regard des deux trous du manche 34 de la pagaie 32, puis en relâchant les deux boutons poussoirs 41 de telle sorte que les deux boutons poussoirs 41 font saillie des deux trous 42 de la pale amovible 33.

De même, le pratiquant peut détacher la pale amovible 33 du manche 34 en pressant les deux boutons poussoirs 41 puis en retirant la pale amovible 33.

Si l'on se réfère à la Figure 8, on peut voir qu'il y est représenté un ensemble pagaie 51 selon un quatrième mode de réalisation de l'invention.

Les éléments communs entre le premier mode de réalisation de l'invention sur les Figures 1 à 5 et ce quatrième mode de réalisation de l'invention portent le même chiffre de référence auquel on a ajouté 50, et ne seront pas décrits plus en détail ici lorsqu'ils sont de structures identiques.

Selon ce quatrième mode de réalisation, la pale amovible 53 ne comprend pas d'extrémité allongée et est directement fixée sur la pale fixe dans la configuration double pagaie et sur l'élément formant poignée dans la configuration pagaie simple.

En outre, selon ce quatrième mode de réalisation, les moyens de fixation sont constitués d'un élément d'accouplement 60 disposé à travers l'épaisseur de la pale amovible 53 et configuré pour s'accoupler avec un élément complémentaire (non représenté à la Figure 8) disposé sur la pale fixe et l'élément formant poignée.

L'élément complémentaire est une plaque et l'élément d'accouplement 60 est un disque fixé en rotation dans l'épaisseur de la pale amovible 53, le disque 60 comprenant une poignée 61 et étant configuré pour s'emboîter dans la plaque lors d'une rotation d'un demi-tour du disque 60 à l'aide de la poignée 61, ce type de fixation étant similaire à une fixation à plaques de snowboard.

Il est à noter que l'élément d'accouplement 60 pourrait également être une vis ou un bouton à tige filetée et l'élément complémentaire un trou taraudé complémentaire, le vissage de la vis ou de la tige filetée du bouton à tige filetée à travers l'épaisseur de la pale amovible 53 puis dans le trou taraudé de la pagaie 52 permettant de fixer la pale amovible 53 sur la pagaie 52, sans s'écarter du cadre de la présente invention.

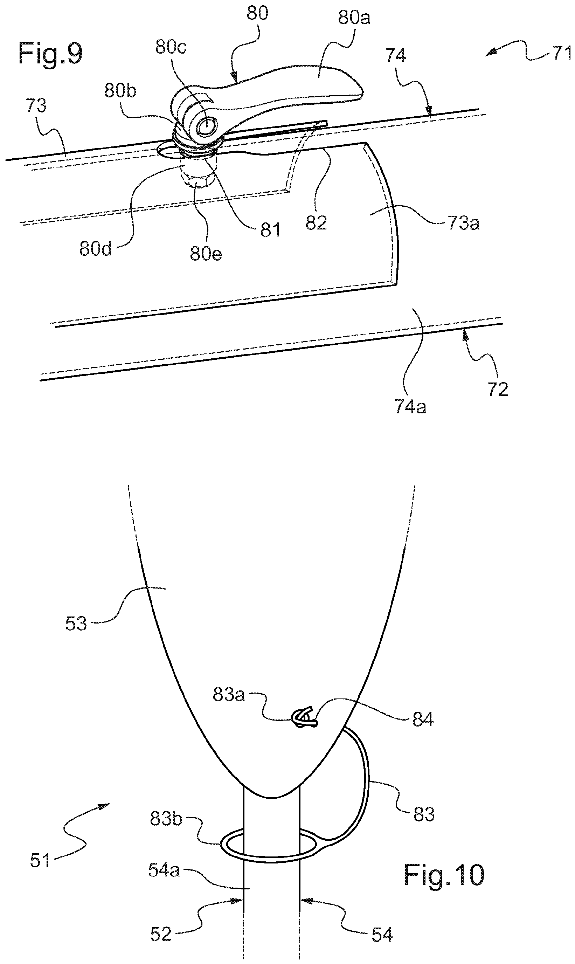

Si l'on se réfère à la Figure 9, on peut voir qu'il y est représenté un ensemble pagaie 71 selon un cinquième mode de réalisation de l'invention.

Les éléments communs entre le premier mode de réalisation de l'invention sur les Figures 1 à 5 et ce cinquième mode de réalisation de l'invention portent le même chiffre de référence auquel on a ajouté 70, et ne seront pas décrits plus en détail ici lorsqu'ils sont de structures identiques.

Selon ce cinquième mode de réalisation, le manche 74 de la pagaie 72 est creux et les moyens de fixation sont constitués d'un levier à serrage rapide 80 disposé sur chacun des premier 74a et second tubes du manche 74 de la pagaie 72.

Le levier à serrage rapide 80 comprend une poignée de serrage 80a reliée à une rondelle 80b par l'intermédiaire d'un axe de rotation 80c.

Le levier à serrage rapide 80 comprend en outre un ressort élastomère 80d disposé sous la rondelle 80b et maintenu par un écrou 80e, le ressort élastomère 80d étant inséré dans un trou 81 formé sur le manche 74, la rondelle 80b étant disposée au-dessus du trou 81 et le diamètre de la rondelle 80b étant supérieur à celui du trou 81.

Sous l'action de la poignée de serrage 80a, le ressort élastomère 80d s'écrase et presse la rondelle 80b contre le manche 74 de la pagaie 72.

L'extrémité allongée 73a de la pale amovible 73 possède une encoche évasée 82 dans laquelle peut être inséré le levier à serrage rapide 80, lorsque la poignée de serrage 80a est desserrée, les bords de l'encoche évasée 82 étant disposés entre la rondelle 80b du levier à serrage rapide 80 et le manche 74 de la pagaie 72.

Le serrage de la poignée de serrage 80a permet de pousser la rondelle 80b contre les bords de l'encoche évasée 82 afin de bloquer la pale amovible 73 contre le manche 74 de la pagaie 72.

Il est à noter que les moyens de fixation de la pale amovible 73 sur la pagaie 72 pourraient également être constitués par emboîtement dans le manche 74 ou autour du manche 74, le maintien en place de la pale amovible 73 étant assuré par l'un parmi un manchon coulissant, un manchon rotatif, une bague, un poussoir et un système élastique, sans s'écarter du cadre de la présente invention.

Les moyens de fixation pourraient également être constitués par emboîtement de type baïonnette dans le manche 74, sans s'écarter du cadre de la présente invention.

Si l'on se réfère à la Figure 10, on peut voir qu'il y est représenté une variante de l'ensemble pagaie 51 selon le quatrième mode de réalisation de l'invention.

Il est à noter que l'élément d'accouplement 60 selon le quatrième mode de réalisation n'a pas été représenté à la Figure 10 afin de ne pas surcharger le dessin.

L'ensemble pagaie 51 comprend en outre un cordon de sécurité 83 configuré pour relier la pale amovible 53 au manche 54 de la pagaie 52.

La pale amovible 53 comprend un trou 84 dans lequel est insérée une première extrémité du cordon de sécurité 83 sur laquelle un nœud 83a est réalisé.

La seconde extrémité du cordon de sécurité 83 comprend une boucle 83b disposée autour du manche 54 de la pagaie 52, de telle sorte que le cordon de sécurité 83 est configuré pour coulisser le long du manche 54 de la pagaie 52.

Le cordon de sécurité 83 permet de toujours relier la pale amovible 53 à la pagaie 52 afin d'éviter de perdre la pale amovible 53 lorsque celle-ci n'est pas fixée sur la pagaie 52.

Il est à noter que la première extrémité 83a du cordon de sécurité 83 pourrait également être insérée dans un orifice d'une excroissance formée sur la pale amovible 53, sans s'écarter du cadre de la présente invention.

Le cordon de sécurité 83 est, de préférence, en matière élastique afin d'apporter plus de confort au pratiquant lorsqu'il attache la pale amovible 53 sur la pagaie 52.

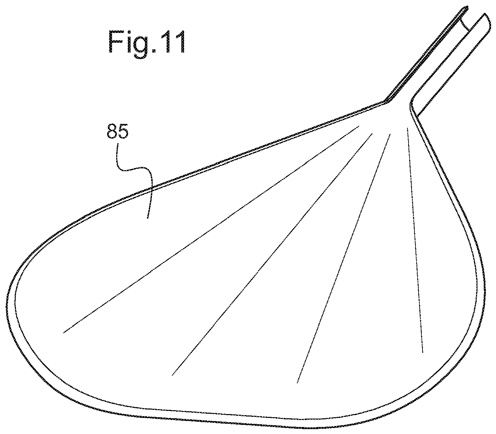

Si l'on se réfère à la Figure 11, on peut voir qu'il y est représenté une pale amovible 85 selon une variante de l'invention.

Les moyens de fixation de la pale amovible 85 n'ont pas été représentés à la Figure 11 afin de ne pas surcharger les dessins.

La pale amovible 85 possède une concavité dans une direction perpendiculaire à sa direction de longueur.

Ainsi, la concavité de cette pale amovible 85 permet au pratiquant d'obtenir une meilleure propulsion lorsque celui-ci rame à l'aide de l'ensemble pagaie en configuration double pagaie.

Il est à noter que, dans ce cas, la pale fixe possède également une concavité dans une direction perpendiculaire à sa direction de longueur, de sorte que, dans la configuration pagaie simple, la pale amovible 85 et la pale fixe empilées forment une unique pale à concavité.

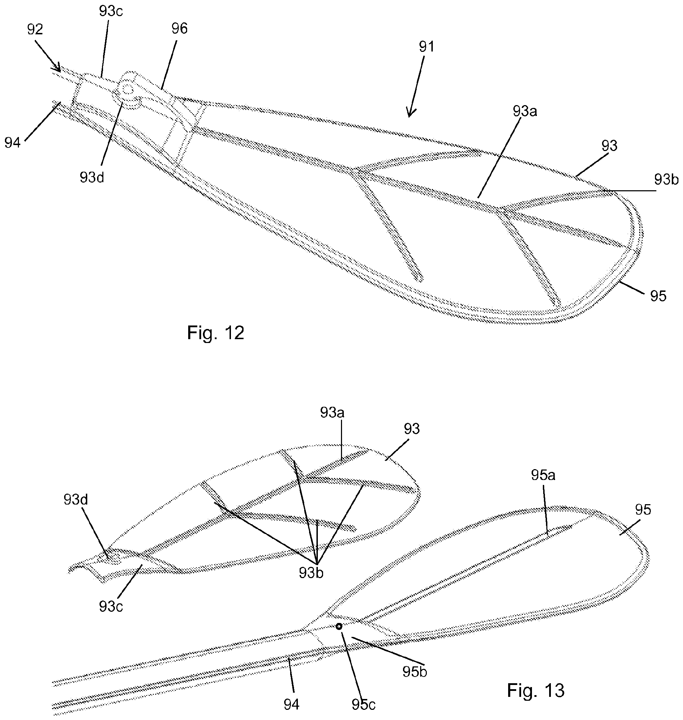

Si l'on se réfère aux Figures 12 à 14, on peut voir qu'il y est représenté un ensemble pagaie 91 selon un sixième mode de réalisation de l'invention.

Dans ce sixième mode de réalisation, l'ensemble pagaie 91 comprend une pale fixe 95 montée à une extrémité du manche de la pagaie 94, et une pale amovible 93, de taille légèrement inférieure à celle de la pale fixe 95, mais de même forme, les pales amovible 93 et fixe 95 étant homothétiques.

Dans le mode de réalisation représenté sur les Figures 12 à 14, les pales amovible 93 et fixe 95 présentent une concavité selon leur direction de longueur et une concavité selon leur direction perpendiculaire à leur direction de longueur, pour avoir une concavité globale semblable à celle d'une cuillère. Bien que les pales amovible 93 et fixe 95 aient deux concavités dans le mode de réalisation représenté, l'invention n'est pas limitée à cet égard. De préférence, les pales amovible 93 et fixe 95 auront de préférence au moins la concavité selon leur direction de longueur.

La pale amovible 93 présente un réseau de nervures destiné à renforcer sa rigidité, une nervure longitudinale 93a et des nervures auxiliaires 93b s'étendant depuis la nervure longitudinale 93a vers le bord de la pale amovible 93.

Les nervures 93a, 93b sont formées sur la face de la pale amovible 93 opposée à la face destinée à venir se coller contre la pale fixe 95, la nervure longitudinale 93a correspondant à une rainure sur la face opposée de la pale amovible 93 destinée à coopérer avec une nervure longitudinale correspondante 95a formée sur la face de la pale fixe destinée à accueillir la pale amovible 93.

La pale fixe 95 est fixée au manche 94 de la pagaie 92 par une base 95b percée d'un trou 95c.

La pale amovible 93 présente également une base 93c percée d'un trou 93d, les trous 93d et 95c étant destinés à laisser passer la tige 96c d'une attache rapide 96, comportant un levier à serrage rapide 96a pivotant autour d'un axe 96b, l'extrémité de la tige 96c étant destinée à coopérer avec un écrou 96d, une plaque 97 ou rondelle pouvant facultativement mais non obligatoirement être interposée.

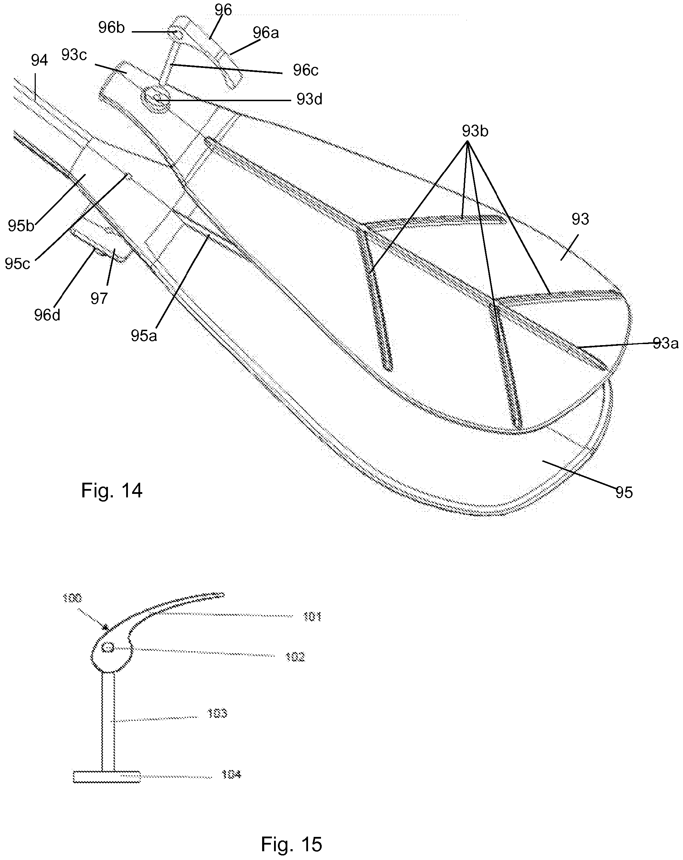

L'attache rapide peut également être une attache rapide 100 d'un seul tenant avec la tige 103 comme représenté sur la Figure 15, l'extrémité de la tige 103 opposée à celle portant le levier à serrage 101 montée sur un axe 102 étant une barrette 104 formant avec la tige 103 un T. Les trous 93d et 95c sont alors des fentes permettant de laisser passer la barrette 103. La solidarisation est alors obtenue en tournant la barrette 104 de 90° insérée dans les trous 93d et 95c, puis en serrant de levier à serrage rapide 101. La barrette 104 perpendiculaire à la fente formée dans les trous 93d et 95c empêchera la pale amovible de bouger, le levier à serrage rapide 101 permettant de son côté le serrage de l'ensemble. L'extrémité de la tige pourrait également, sans s'écarter du cadre de l'invention, être un crochet ou une baïonnette.

Ainsi, lorsque la pale amovible 93 n'est pas utilisée, celle-ci est appliquée contre la pale fixe 95 avec sa rainure en regard de la nervure 95a de la pale fixe 95, puis l'attache rapide 96 permet de solidariser les pales.

En utilisation, un trou similaire au trou 95c est formé au voisinage de la poignée de la pagaie simple, afin de fixer la pagaie amovible 93 sur la poignée pour obtenir une pagaie double.

La fixation dans ce mode de réalisation passe à travers le manche, que ce soit en configuration pagaie simple ou pagaie double.

Dans ce mode de réalisation, la pale amovible 93 peut être fixée sur l'intrados ou l'extrados de la pale fixe 95. Il faut faire en sorte qu'une rainure de l'une corresponde à une nervure de l'autre sur les deux faces destinées à coopérer, afin de garantir une bonne fixation.

Dans tous les modes de réalisation, la pale amovible, comme la pale fixe, peuvent également présenter une concavité dans une direction parallèle à leur direction de longueur et/ou une concavité dans une direction perpendiculaire à leur direction de longueur.

La pale amovible, et la pale fixe, auront de préférence une concavité dans une direction parallèle à leur direction de longueur et, facultativement, une concavité dans une direction perpendiculaire à leur direction de longueur.

Egalement, dans tous les modes de réalisation, la pale amovible aura de préférence une taille légèrement inférieure à celle de la pale fixe et la même forme, les deux pales étant homothétiques l'une de l'autre, afin de mieux s'insérer dessus.

## Revendications

1. Ensemble pagaie (1 ; 11 ; 31 ; 51 ; 71 ; 91) comprenant une pagaie (2 ; 12 ; 32 ; 52 ; 72 ; 92), ladite pagaie (2 ; 12 ; 32 ; 52 ; 72 ; 92) comprenant un manche (4 ; 14 ; 34 ; 54 ; 74 ; 94) à une extrémité duquel est fixée une pale fixe (5 ; 15 ; 95) et à l'extrémité opposée duquel est fixé un élément formant poignée (6), l'ensemble pagaie (1 ; 11 ; 31 ; 51 ; 71 ; 91) comprenant en outre une pale amovible (3 ; 13 ; 53 ; 85 ; 93) et des moyens de fixation configurés pour fixer de manière amovible la pale amovible (3 ; 13 ; 53 ; 85 ; 93) sur la pagaie (2 ; 12 ; 32 ; 52 ; 72 ; 92) sur l'extrémité du manche (4 ; 14 ; 34 ; 54 ; 74 ; 94) côté élément formant poignée (6) de telle sorte que l'ensemble pagaie (1 ; 11 ; 31 ; 51 ; 71 ; 91) est apte à adopter une première configuration pagaie double lorsque la pale amovible (3 ; 13 ; 53 ; 85 ; 93) est fixée sur l'extrémité du manche (4 ; 14 ; 34 ; 54 ; 74 ; 94) côté élément formant poignée (6), **caractérisé en ce que** les moyens de fixation sont également configurés pour fixer de manière amovible la pale amovible (3 ; 13 ; 53 ; 85 ; 93) sur l'extrémité du manche (4 ; 14 ; 34 ; 54 ; 74 ; 94) côté pale fixe (5 ; 15 ; 95), de telle sorte que l'ensemble pagaie (1 ; 11 ; 31 ; 51 ; 71 ; 91) est apte à adopter une seconde configuration pagaie simple lorsque la pale amovible (3 ; 13 ; 53 ; 85 ; 93) est fixée sur l'extrémité du manche (4 ; 14 ; 34 ; 54 ; 74) côté pale fixe (5 ; 15 ; 95) contre la pale fixe (5 ; 15 ; 95), et **en ce que** dans la seconde configuration, l'intrados de la pale amovible (3 ; 13 ; 53 ; 85 ; 93) est disposé contre l'extrados de la pale fixe (5 ; 15 ; 95) dont il épouse la forme ou l'extrados de la pale amovible (3 ; 13 ; 53 ; 85 ; 93) est disposé contre l'intrados de la pale fixe (5 ; 15 ; 95) dont il épouse la forme.

2. Ensemble pagaie (1 ; 11) selon la revendication 1, **caractérisé par le fait que** les moyens de fixation comprennent au moins une attache (7) comprenant un élément d'accouplement (7a) avec au moins une encoche (7b), un levier de serrage (7c) comprenant un crochet (7d), et un câble de serrage (7e) reliant l'élément d'accouplement (7a) et le levier de serrage (7c), l'élément d'accouplement (7a) étant fixé sur l'un de la pale amovible (3 ; 13 ; 85) et du manche (4 ; 14) de la pagaie (2 ; 12), le levier de serrage (7c) étant configuré pour être rabattu en force contre le manche (4 ; 14) de la pagaie (2 ; 12) une fois que le câble de serrage (7e) entoure l'autre de la pale amovible (3 ; 13 ; 85) et du manche (4 ; 14) de la pagaie (2 ; 12) et que le crochet (7d) du levier de serrage (7c) est inséré dans l'une de l'au moins une encoche (7b) de l'élément d'accouplement (7a).

3. Ensemble pagaie (1 ; 11) selon la revendication 1 , **caractérisé par le fait que** les moyens de fixation comprennent au moins une bande de fixation de type à boucles et crochets disposée sur l'un de la pale amovible (3 ; 13 ; 85) et du manche (4 ; 14) de la pagaie (2 ; 12) .

4. Ensemble pagaie (31) selon la revendication 1, **caractérisé par le fait que** le manche (34) de la pagaie (32) est creux et les moyens de fixation comprennent au moins une lame ressort (40) disposée dans le manche (34) de la pagaie (32) et dont les deux extrémités portent respectivement deux plots (41) agencés pour faire saillie de deux trous formés dans le manche (34) de la pagaie (32) et diamétralement opposés, les deux plots (41) formant ainsi deux boutons poussoirs, la pale amovible (33) comprenant deux trous traversants (42) configurés pour recevoir les deux boutons poussoirs afin de fixer la pale amovible (33) sur le manche (34) de la pagaie (32).

5. Ensemble pagaie (51) selon la revendication 1, **caractérisé par le fait que** les moyens de fixation comprennent au moins un élément d'accouplement (60) disposé à travers l'épaisseur de la pale amovible (53) ou rapporté sur celle-ci et configuré pour s'accoupler avec un élément complémentaire disposé sur la pagaie (52).

6. Ensemble pagaie (51) selon la revendication 5, **caractérisé par le fait que** l'au moins un élément d'accouplement (60) est une vis ou un bouton à tige filetée et l'élément complémentaire est un trou taraudé.

7. Ensemble pagaie (71) selon la revendication 1, **caractérisé par le fait que** les moyens de fixation comprennent au moins un levier à serrage rapide (80) disposé sur le manche (74) de la pagaie (72) et configuré pour être inséré dans une encoche (82) formée dans la pale amovible (73) puis pour être serré afin de fixer la pale amovible (73) sur le manche (74) de la pagaie (72).

8. Ensemble pagaie (91) la revendication 1, **caractérisé par le fait que** les moyens de fixation comprennent au moins une attache rapide (80) solidaire d'une tige (96c) dont l'extrémité porte un moyen d'accrochage, un trou (93d) étant formé dans la pale amovible (93), et un trou étant formé sous la poignée et dans la pale fixe (95) afin de fixer la pale amovible (93) à l'une de la poignée ou de la pale fixe (95) par passage de la tige (96c) dans les trous, et serrage de l'attache rapide (80) avec les moyens d'accrochage qui coopèrent avec l'une de la poignée ou de la pale fixe (95).

9. Ensemble pagaie (1 ; 11) selon l'une des revendications 1 à 8, **caractérisé par le fait que** les moyens de fixation comprennent au moins une saillie disposée sur l'une de la pale amovible (3 ; 13 ; 85) et de la pagaie (2 ; 12) et configurée pour s'emboîter dans au moins un renfoncement complémentaire disposé sur l'autre de la pale amovible (3 ; 13 ; 85) et de la pagaie (2 ; 12).

10. Ensemble pagaie (11) selon la revendication 9, **caractérisé par le fait que** l'au moins une saillie est au moins un pointeau (21) configuré pour s'emboîter dans l'au moins un renfoncement complémentaire (22).

11. Ensemble pagaie (1) selon la revendication 9, **caractérisé par le fait que** l'au moins une saillie est au moins une rainure (8) et l'au moins un renfoncement complémentaire est au moins une fente (9) de forme complémentaire de l'au moins une rainure (8).

12. Ensemble pagaie (11) selon l'une des revendications 1 à 11, **caractérisé par le fait que** l'extrémité (13a) de la pale amovible (13) destinée à être fixée sur le manche (14) de la pagaie (12) est allongée et possède une forme complémentaire d'un renfoncement (20) formé sur le manche (14) de la pagaie (12), de telle sorte que, lorsque la pale amovible (13) est fixée sur la pagaie (12), le manche (14) possède une section sensiblement constante entre ses deux extrémités.

13. Ensemble pagaie (1 ; 11 ; 31 ; 51 ; 71 ; 91) selon l'une des revendications 1 à 12, **caractérisé par le fait que** le manche (4 ; 14 ; 34 ; 54 ; 74 ; 94) de la pagaie (2 ; 12 ; 32 ; 52 ; 72 ; 92) est réglable en hauteur.

14. Ensemble pagaie (51) selon l'une des revendications 1 à 13, **caractérisé par le fait que** l'ensemble pagaie (51) comprend en outre un cordon de sécurité (83) configuré pour relier la pale amovible (53) au manche (54) de la pagaie (52), ledit cordon de sécurité (83) étant configuré pour coulisser le long du manche (54) de la pagaie (52).

15. Ensemble pagaie (1 ; 11 ; 31 ; 51 ; 71) selon l'une des revendications 1 à 14, **caractérisé par le fait que** la pale amovible (85) et la pale fixe (5 ; 15) possèdent au moins l'une d'une concavité dans une direction parallèle à leur direction de longueur ou d'une concavité dans une direction perpendiculaire à leur direction de longueur.

16. Ensemble pagaie (1 ; 11 ; 31 ; 51 ; 71 ; 91) selon l'une des revendications 1 à 14, **caractérisé par le fait que** la surface utile de la pale amovible (3 ; 13 ; 53 ; 85) est inférieure ou égale à la surface utile de la pale fixe (5 ; 15).

17. Ensemble pagaie (1 ; 11 ; 31 ; 51 ; 71 ; 91) selon l'une des revendications 1 à 16, **caractérisé par le fait que** l'élément formant poignée (6) est en forme de T dont le fût est solidaire du manche (4 ; 14 ; 34 ; 54 ; 74) de la pagaie (2 ; 12 ; 32 ; 52 ; 72) .

## Patentansprüche

1. Paddelanordnung (1; 11; 31; 51; 71; 91), umfassend ein Paddel (2; 12; 32; 52; 72; 92), wobei das Paddel (2; 12; 32; 52; 72; 92) einen Stiel (4; 14; 34; 54; 74; 94) umfasst, an dessen einem Ende eine feste Schaufel (5; 15; 95) befestigt ist und an dessen entgegengesetztem Ende ein Element befestigt ist, das einen Griff (6) bildet, wobei die Paddelanordnung (1; 11; 31; 51; 71; 91) ferner eine lösbare Schaufel (3; 13; 53; 85; 93) und Befestigungsmittel umfasst, die konfiguriert sind, um die lösbare Schaufel (3; 13; 53; 85; 93) lösbar auf dem Paddel (2; 12; 32; 52; 72; 92) an dem Ende des Stiels (4; 14; 34; 54; 74; 94) auf der Seite des Elements zu befestigen, das den Griff (6) bildet, so dass die Paddelanordnung (1; 11; 31; 51; 71; 91) imstande ist, eine erste Doppelpaddelkonfiguration anzunehmen, wenn die lösbare Schaufel (3; 13; 53; 85; 93) an dem Ende des Stiels (4; 14; 34; 54; 74; 94) auf der Seite des Elements befestigt ist, das den Griff (6) bildet, **dadurch gekennzeichnet, dass** die Befestigungsmittel ebenfalls konfiguriert sind, um die lösbare Schaufel (3; 13; 53; 85; 93) lösbar an dem Ende des Stiels (4; 14; 34; 54; 74; 94) auf der Seite der festen Schaufel (5; 15; 95) zu befestigen, so dass die Paddelanordnung (1; 11; 31; 51; 71; 91) imstande ist, eine zweite Einfachpaddelkonfiguration anzunehmen, wenn die lösbare Schaufel (3; 13; 53; 85; 93) an dem Ende des Stiels (4; 14; 34; 54; 74; 94) auf der Seite der festen Schaufel (5; 15; 95) an der festen Schaufel (5; 15; 95) befestigt ist, und dass in der zweiten Konfiguration die Unterseite der lösbaren Schaufel (3; 13; 53; 85; 93) auf der Oberseite der festen Schaufel (5; 15; 95) angeordnet ist, an deren Form sie sich anschmiegt, oder die Oberseite der lösbaren Schaufel (3; 13; 53; 85; 93) auf der Unterseite der festen Schaufel (5; 15; 95) angeordnet ist, an deren Form sie sich anschmiegt.

2. Paddelanordnung (1; 11) nach Anspruch 1, **dadurch gekennzeichnet, dass** die Befestigungsmittel mindestens ein Befestigungselement (7) umfassen, umfassend ein Kopplungselement (7a) mit mindestens einer Kerbe (7b), einen Spannhebel (7c), umfassend einen Haken (7d) , und ein Spannkabel (7e), welches das Kopplungselement (7a) und den Spannhebel (7c) verbindet, wobei das Kopplungselement (7a) auf einem von der lösbaren Schaufel (3; 13; 85) und dem Stiel (4; 14) des Paddels (2; 12) befestigt ist, wobei der Spannhebel (7c) konfiguriert ist, um mit Kraft gegen den Stiel (4; 14) des Paddels (2; 12) heruntergeklappt zu werden, sobald das Spannkabel (7e) den anderen von der lösbaren Schaufel (3; 13; 85) und dem Stiel (4; 14) des Paddels (2; 12) umgibt und der Haken (7d) des Spannhebels (7c) in einer von der mindestens einen Kerbe (7b) des Kopplungselements (7a) eingesetzt ist.

3. Paddelanordnung (1; 11) nach Anspruch 1, **dadurch gekennzeichnet, dass** die Befestigungsmittel mindestens ein Befestigungsband vom Typ mit Schlaufen und Haken umfassen, das auf einem von der lösbaren Schaufel (3; 13; 85) und dem Stiel (4; 14) des Paddels (2; 12) angeordnet sind.

4. Paddelanordnung (31) nach Anspruch 1, **dadurch gekennzeichnet, dass** der Stiel (34) des Paddels (32) hohl ist und die Befestigungsmittel mindestens eine Blattfeder (40) umfassen, die im Stiel (34) des Paddels (32) angeordnet ist und deren zwei Enden jeweils zwei Klötzchen (41) tragen, die eingerichtet sind, um aus zwei Löchern herauszuragen, die in dem Stiel (34) des Paddels (32) ausgebildet sind und diametral gegenüberliegen, wobei die zwei Klötzchen (41) somit zwei Druckköpfe bilden, wobei die lösbare Schaufel (33) zwei Durchgangslöcher (42) umfasst, die konfiguriert sind, um die zwei Druckknöpfe aufzunehmen, um die lösbare Schaufel (33) auf dem Stiel (34) des Paddels (32) zu befestigen.

5. Paddelanordnung (51) nach Anspruch 1, **dadurch gekennzeichnet, dass** die Befestigungsmittel mindestens ein Kopplungselement (60) umfassen, das durch die Stärke der lösbaren Schaufel (53) angeordnet oder auf dieser angebracht ist und konfiguriert, um sich mit einem komplementären Element zu koppeln, das auf dem Paddel (52) angeordnet ist.

6. Paddelanordnung (51) nach Anspruch 5, **dadurch gekennzeichnet, dass** das mindestens eine Kopplungselement (60) eine Schraube oder ein Knopf mit Gewindeschaft ist und das komplementäre Element ein Gewindeloch ist.

7. Paddelanordnung (71) nach Anspruch 1, **dadurch gekennzeichnet, dass** die Befestigungsmittel mindestens einen Schnellspannhebel (80) umfassen, der auf dem Stiel (74) des Paddels (72) angeordnet und konfiguriert ist, um in eine Kerbe (82) eingesetzt zu sein, die in der lösbaren Schaufel (73) ausgebildet ist, dann, um gespannt zu sein, um die lösbare Schaufel (73) auf dem Stiel (74) des Paddels (72) zu befestigen.

8. Paddelanordnung (91) nach Anspruch 1, **dadurch gekennzeichnet, dass** die Befestigungsmittel mindestens ein Schnellbefestigungselement (80) umfassen, das mit einem Stift (96c) fest verbunden ist, dessen Ende ein Hakenmittel trägt, wobei ein Loch (93d) in der lösbaren Schaufel (93) ausgebildet ist, und ein Loch unter dem Griff und in der festen Schaufel (95) ausgebildet ist, um die lösbare Schaufel (93) an einem von dem Griff oder der festen Schaufel (95) durch Durchgang des Stifts (96c) in den Löchern und Spannen des Schnellbefestigungselements (80) mit den Hakenmitteln zu befestigen, die mit einem von dem Griff oder der festen Schaufel (95) zusammenwirken.

9. Paddelanordnung (1; 11) nach einem der Ansprüche 1 bis 8, **dadurch gekennzeichnet, dass** die Befestigungsmittel mindestens einen Vorsprung umfassen, der auf einem von der lösbaren Schaufel (3; 13; 85) und dem Paddels (2; 12) angeordnet und konfiguriert ist, um in mindestens eine komplementäre Verstärkung einzurasten, die auf dem anderen von der lösbaren Schaufel (3; 13; 85) und dem Paddels (2; 12) angeordnet ist.

10. Paddelanordnung (11) nach Anspruch 9, **dadurch gekennzeichnet, dass** der mindestens eine Vorsprung mindestens ein Sporn (21) ist, der konfiguriert ist, um in mindestens eine komplementäre Verstärkung (22) einzurasten.

11. Paddelanordnung (1) nach Anspruch 9, **dadurch gekennzeichnet, dass** der mindestens eine Vorsprung mindestens eine Nut (8) ist und die mindestens eine komplementäre Verstärkung mindestens ein Schlitz (9) komplementärer Form der mindestens einen Nut (8) ist.

12. Paddelanordnung (11) nach einem der Ansprüche 1 bis 11, **dadurch gekennzeichnet, dass** das Ende (13a) der lösbaren Schaufel (13), das zur Befestigung auf dem Stiel (14) des Paddels (12) bestimmt ist, länglich ist und eine komplementäre Form einer Verstärkung (20) besitzt, die auf dem Stiel (14) des Paddels (12) ausgebildet ist, so dass, wenn die lösbare Schaufel (13) auf dem Paddel (12) befestigt ist, der Stiel (14) einen etwa konstanten Querschnitt zwischen seinen zwei Enden besitzt.

13. Paddelanordnung (1; 11; 31; 51; 71; 91) nach einem der Ansprüche 1 bis 12, **dadurch gekennzeichnet, dass** der Stiel (4; 14; 34; 54; 74; 94) des Paddels (2; 12; 32; 52; 72; 92) in der Höhe einstellbar ist.

14. Paddelanordnung (51) nach einem der Ansprüche 1 bis 13, **dadurch gekennzeichnet, dass** die Paddelanordnung (51) ferner eine Sicherheitsleine (83) umfasst, die konfiguriert ist, um die lösbare Schaufel (53) mit dem Stiel (54) des Paddels (52) zu verbinden, wobei die Sicherheitsleine (83) konfiguriert ist, um entlang des Stiels (54) des Paddels (52) zu gleiten.

15. Paddelanordnung (1; 11; 31; 51; 71) nach einem der Ansprüche 1 bis 14, **dadurch gekennzeichnet, dass** die lösbare Schaufel (85) und die feste Schaufel (5; 15), mindestens eine, eine Konkavität in eine Richtung besitzen, die parallel zu ihrer Längsrichtung ist, oder eine Konkavität in eine Richtung, die senkrecht zu ihrer Längsrichtung ist.

16. Paddelanordnung (1; 11; 31; 51; 71; 91) nach einem der Ansprüche 1 bis 14, **dadurch gekennzeichnet, dass** die Nutzfläche der lösbaren Schaufel (3; 13; 53; 85) kleiner oder gleich der Nutzfläche der festen Schaufel (5; 15) ist.

17. Paddelanordnung (1; 11; 31; 51; 71; 91) nach einem der Ansprüche 1 bis 16, **dadurch gekennzeichnet, dass** das Element, das den Griff (6) bildet, in T-Form ist, dessen Schaft mit dem Stiel (4; 14; 34; 54; 74) des Paddels (2; 12; 32; 52; 72) fest verbunden ist.

## Claims

1. A paddle assembly (1; 11; 31; 51; 71; 91) comprising a paddle (2; 12; 32; 52; 72; 92), said paddle (2; 12; 32; 52; 72; 92) comprising a handle (4; 14; 34; 54; 74; 94), at one end of which a fixed blade (5; 15; 95) is attached and at the opposite end of which a grip member (6) is attached, wherein the paddle assembly (1; 11; 31; 51; 71; 91) further comprises a removable blade (3; 13; 53; 85; 93) and attachment means configured to removably attach the removable blade (3; 13; 53; 85; 93) to the paddle (2; 12; 32; 52; 72; 92) on the end of the handle (4; 14; 34; 54; 74; 94) on the grip member (6) side, such that the paddle assembly (1; 11; 31; 51; 71; 91) is able to adopt a first double-paddle configuration when the removable blade (3; 13; 53; 85; 93) is attached to the end of the handle (4; 14; 34; 54; 74; 94) on the grip member (6) side, **characterized in that** the attachment means are also configured to removably attach the removable blade (3; 13; 53; 85; 93) to the end of the handle (4; 14; 34; 54; 74; 94) on the fixed blade (5; 15; 95) side, such that the paddle assembly (1; 11; 31; 51; 71; 91) is able to adopt a second single-paddle configuration when the removable blade (3; 13; 53; 85; 93) is attached to the end of the handle (4; 14; 34; 54; 74) on the fixed blade (5; 15; 95) side against the fixed blade (5; 15; 95), and **in that**, in the second configuration, the lower surface of the removable blade (3; 13; 53; 85; 93) is located against the upper surface of the fixed blade (5; 15; 95) whose shape matches therewith or the upper surface of the removable blade (3; 13; 53; 85; 93) is located against the lower surface of the fixed blade (5; 15; 95) whose shape matches therewith.

2. The paddle assembly (1; 11) according to claim 1, **characterized in that** the attachment means comprise at least one fastener (7) comprising a coupling element (7a) with at least one notch (7b), a clamping lever (7c) comprising a hook (7d), and a clamping cable (7e) connecting the coupling element (7a) and the clamping lever (7c), the coupling element (7a) being attached on one of the removable blade (3; 13; 85) and the handle (4; 14) of the paddle (2; 12), the clamping lever (7c) being configured to be forcibly folded down against the handle (4; 14) of the paddle (2; 12) once the clamping cable (7e) surrounds the other of the removable blade (3; 13; 85) and the handle (4; 14) of the paddle (2; 12), and **in that** the hook (7d) of the clamping lever (7c) is inserted into one of the at least one notch (7b) of the coupling element (7a).

3. The paddle assembly (1; 11) according to claim 1, **characterized in that** the attachment means comprise at least one attachment strip of the loop and hook type arranged on one of the removable blade (3; 13; 85) and the handle (4; 14) of the paddle (2; 12).

4. The paddle assembly (31) according to claim 1, **characterized in that** the handle (34) of the paddle (32) is hollow and the attachment means comprise at least one spring leaf (40) arranged in the handle (34) of the paddle (32) and both ends of which respectively bear two pins (41) arranged to protrude from two holes formed in the handle (34) of the paddle (32) and diametrically opposite, the two pins (41) thus forming two pushbuttons, the removable blade (33) comprising two through holes (42) configured to receive the two pushbuttons in order to attach the removable blade (33) on the handle (34) of the paddle (32).

5. The paddle assembly (51) according to claim 1, **characterized in that** the attachment means comprise at least one coupling element (60) arranged through the thickness of the removable blade (53) or attached thereon and configured to be coupled with a complementary element arranged on the paddle (52).

6. The paddle assembly (51) according to claim 5, **characterized in that** the at least one coupling element (60) is a screw or a button with a threaded rod and the complementary element is a tapped hole.

7. The paddle assembly (71) according to claim 1, **characterized in that** the attachment means comprises at least one quick clamping lever (80) arranged on the handle (74) of the paddle (72) and configured to be inserted into a notch (82) formed in the removable blade (73), then to be gripped in order to attach the removable blade (73) to the handle (74) of the paddle (72).

8. The paddle assembly (91) according to claim 1, **characterized in that** the attachment means comprise at least one quick fastener (80) integral with a rod (96c), the end of which bears a catching means, a hole (93d) being formed in the removable blade (93), and a hole being formed below the grip and in the fixed blade (95) in order to attach the removable blade (93) to one of the grip or the fixed blade (95) by passing the rod (96c) in the holes, and gripping the quick fastener (80) with the catching means which cooperate with one of the grip or the fixed blade (95).

9. The paddle assembly (1; 11) according to one of claims 1 to 8, **characterized in that** the attachment means comprise at least one protrusion arranged on one of the removable blade (3; 13; 85) and the paddle (2; 12) and configured to nest in at least one complementary recess arranged on the other of the removable blade (3; 13; 85) and the paddle (2; 12).

10. The paddle assembly (11) according to claim 9, **characterized in that** the at least one protrusion is at least one needle (21) configured to nest in the at least one complementary recess (22).

11. The paddle assembly (1) according to claim 9, **characterized in that** the at least one protrusion is at least one groove (8) and the at least one complementary recess is at least one slit (9) with a shape complementary to the at least one groove (8).

12. The paddle assembly (11) according to one of claims 1 to 11, **characterized in that** the end (13a) of the removable blade (13) intended to be fixed on the handle (14) of the paddle (12) is elongate and has a shape complementary to a recess (20) formed on the handle (14) of the paddle (12) such that, when the removable blade (13) is attached on the paddle (12), the handle (14) has a substantially constant section between its two ends.

13. The paddle assembly (1; 11; 31; 51; 71; 91) according to one of claims 1 to 12, **characterized in that** the handle (4; 14; 34; 54; 74; 94) of the paddle (2; 12; 32; 52; 72; 92) is adjustable in terms of height.

14. The paddle assembly (51) according to one of claims 1 to 13, **characterized in that** the paddle assembly (51) further comprises a leash (83) configured to connect the removable blade (53) to the handle (54) of the paddle (52), said leash (83) being configured to slide along the handle (54) of the paddle (52).

15. The paddle assembly (1; 11; 31; 51; 71) according to one of claims 1 to 14, **characterized in that** the removable blade (85) and the fixed blade (5; 15) have at least one of a concavity in a direction parallel to their length direction or a concavity in a direction perpendicular to their length direction.

16. The paddle assembly (1; 11; 31; 51; 71; 91) according to one of claims 1 to 14, **characterized in that** the useful surface of the removable blade (3; 13; 53; 85) is smaller than or equal to the useful surface of the fixed blade (5; 15).

17. The paddle assembly (1; 11; 31; 51; 71; 91) according to one of claims 1 to 16, **characterized in that** the grip member (6) is in the shape of a T, the shaft of which is integral with the handle (4; 14; 34; 54; 74) of the paddle (2; 12; 32; 52; 72).
